(19) **Europäisches Patentamt**

**European Patent Office**

**Office européen des brevets**

(11) **EP 0 806 850 B1**

(12) **EUROPÄISCHE PATENTSCHRIFT**

(45) Veröffentlichungstag und Bekanntmachung des Hinweises auf die Patenterteilung:
**02.11.2005   Patentblatt 2005/44**

(51) Int Cl.$^7$: **H04H 1/00**

(21) Anmeldenummer: **97103914.4**

(22) Anmeldetag: **08.03.1997**

(54) **Verfahren zum Übertragen von COFDM-modulierten Rundfunksignalen über ein Satellitensystem**

Method for transmission of COFDM-modulated broadcast signals through a satellite system

Méthode pour la transmission de signaux de radiodiffusion en modulation par multiplexage par répartition orthogonale de la fréquence codée à travers un système de satellite

(84) Benannte Vertragsstaaten:
**AT BE CH DE DK ES FI FR GB GR IE IT LI LU NL PT SE**
Benannte Erstreckungsstaaten:
**SI**

(30) Priorität: **06.05.1996   DE 19618142**

(43) Veröffentlichungstag der Anmeldung:
**12.11.1997   Patentblatt 1997/46**

(73) Patentinhaber: **Süddeutscher Rundfunk 70190 Stuttgart (DE)**

(72) Erfinder: **Prosch, Theodor Astarion, Dr. 70839 Gerlingen (DE)**

(74) Vertreter: **Konle, Tilmar Patentanwalt Benderstrasse 23a 81247 München (DE)**

(56) Entgegenhaltungen:
EP-A- 0 591 643          EP-A- 0 660 544
WO-A-94/07314           US-A- 4 004 098
US-A- 5 465 096

• BRISKMAN R D: "SATELLITE DAB" INTERNATIONAL JOURNAL OF SATELLITE COMMUNICATIONS, Bd. 13, Nr. 4, 1. Juli 1995 (1995-07-01), Seiten 259-266, XP000579348 ISSN: 0737-2884

**Beschreibung**

Die Erfindung bezieht sich auf ein Verfahren zum Übertragen von COFDM-modulierten Rundfunksignalen über ein Satellitensystem.

Bei dem im Rahmen des Forschungsprojektes EUREKA 147-DAB entwickelten Übertragungsverfahren wird ein einfaches Rundfunksatellitensystem mit erdnahen (Low Earth Orbiting, abgekürzt LEO) oder erdfernen (Medium/High Earth Orbiting, abgekürzt MEO/HEO) Satelliten vorgestellt. Dieses Satellitensystem ermöglicht eine kontinuierliche, weltweite Versorgung, welche durch die Signalübergabe zwischen den Satelliten nicht unterbrochen wird. Damit lassen sich regionale und nationale Bereiche auf einfache Weise versorgen.

Es gibt eine Reihe weiterer Vorschläge zur Verbreitung von digitalen Rundfunksignalen über Satellitensysteme, welche alle von geostationären Umlaufbahnen oder von stark elliptischen, schrägen geosynchronen Umlaufbahnen (beispielsweise die Satellitensystem-Vorschläge Archimedes und Media Star bzw. World Space) Gebrauch machen. Der Vorteil dieser Satellitensysteme wird in den grossen Versorgungsgebieten gesehen, welche sich mit geringen Kosten erzielen lassen. Die Nachteile scheinen jedoch schwerwiegend zu sein, weil die Signalleistung im Versorgungsgebiet nicht ausreichend ist, um mit der Belaubungsdämpfung oder mit der durch Gebäude verursachten Sperrdämpfung fertig zu werden. Geostationäre Satelliten besitzen geringe Elevationswinkel in Gebieten größerer geographischer Breite, so dass eine zuverlässige Versorgung in städtischen Gebieten Europas unmöglich erscheint. Obwohl erdferne HEO-Satelliten große Elevationswinkel in Bereichen hoher geographischer Breite aufweisen, verursacht die Signalübergabe, d.h., das Umschalten von einem Satelliten auf den nächsten Satelliten, eine Unterbrechung der Rundfunkversorgung und den Verlust der DAB-Empfängersynchronisation.

Aus der EPA-0 660 544 ist ein Verfahren zum Übertragen von Signalen über ein Satellitensystem mit Satelliten in erdnahen Bahnen bekannt, bei dem die Signale in der Sendestelle in Abhängigkeit von der Signallaufzeit verzögert werden. Ein weiteres Satellitensystem mit Satelliten in erdnahen Bahnen ist aus der US-A-5 465 096 bekannt, bei welchem das Signal im Satelliten in Abhängigkeit des Abstandes zwischen dem Satelliten und einem Bezugspunkt des Versorgungsgebietes verzögert wird. Diese Verzögerung ist konstant für kreisförmige Bahnen, ändert sich aber für ellipsenförmige Bahnen in Abhängigkeit von der gesamten Entfernung zwischen Sendestelle und Empfänger.

Die Aufgabe der Erfindung besteht darin, ein Verfahren zum Übertragen von COFDM-modulierten Rundfunksignalen über ein Satellitensystem mit mehreren erdnahen Satelliten anzugeben, welches eine unterbrechungsfreie, qualitativ befriedigende Versorgung auch in Stadtbereichen ermöglicht, die aufgrund hoher erzielbarer Leistungsflussdichten im Versorgungsgebiet weder durch Belaubungsdämpfung oder Sperrdämpfung beeinträchtigt wird.

Diese Aufgabe wird erfindungsgemäß durch die kennzeichnenden Merkmale des Patentanspruchs 1 gelöst.

Ein Satelliten-Transponder zur Durchführung des Verfahrens nach Anspruch 1 ist in dem nebengeordneten Patentanspruch 2 angegeben.

Die Erfindung geht von der Überlegung aus, dass die Leistungsübertragung mit einem erdnahen Satellitensystem ausreichend ist, um die mit der Sperrdämpfung und der Belaubungsdämpfung zusammenhängenden Empfangsprobleme zu beseitigen, die bei Satellitensystemen mit erdfernen Umlaufbahnen auftreten. Und zwar weist ein derartiges Satellitensystem den Vorteil einer guten Leistungsbilanz auf der Übertragungsstrecke auf. Ferner geht die Erfindung davon aus, dass das normgemässe DAB-COFDM-Signal gemäss der EUREKA 147-DAB-Spezifikation nicht ohne weiteres geeignet ist, um mit Entfernungs- und Entfernungsgeschwindigkeitseffekten aufgrund der Orbitalbewegung von Satelliten auf erdnahen Umlaufbahnen sowie auf mittleren Umlaufbahnen fertig zu werden. Das erfindungsgemäß vorgeschlagene Systemkonzept beruht auf der Auswertung von Entfernungs-. Entfernungsgeschwindigkeits- und Winkelformationen innerhalb des Satelliten bezüglich eines Bezugspunktes im Versorgungsgebiet. An diesem Bezugspunkt kann eine Uplink-Station errichtet sein. Falls die Versorgungsgebiete größenmässig beschränkt sind und falls einfache Vorkehrungen für die Kompensation von Entfernungs- und Entfernungsgeschwindigkeitseffekten berücksichtigt werden, kann die Leistungsfähigkeit eines derartigen Systems den aufgabengemäßen Anforderungen zufriedenstellend genügen. Insofern wird hier ein vereinfachter Weg eingeschlagen, welcher die Grundanforderungen von Rundfunkanstalten, wie sie typischerweise in Europa und in den U.S.A. gesehen werden, in Betracht zieht. Diese Anforderungen sind (1) die Bereitstellung regionaler Versorgungszonen, (2) eine Versorgung mit hoher Qualität, welche besser oder wenigstens vergleichbar ist mit der Versorgung durch terrestrische Rundfunksendernetze, (3) unterbrechungsfreier Empfang, und (4) kostengünstiger Uplink-Betrieb und Programmzuführung.

Die Erfindung wird im Folgenden anhand der Zeichnungen näher erläutert. Es zeigt:

Fig. 1    ein Blockschaltbild der zur Durchführung einer ersten Ausführungsform des erfindungsgemäßen Verfahrens erforderlichen Komponenten eines Satellitentransponders für Übertragung von digitalen Hörfunksignalen nach dem EUREKA 147-DAB-Standard;

Fig. 2    eine schematische Darstellung des Versorgungsgebietes eines Rundfunksatelliten mit erdnaher Umlaufbahn;

Fig. 3    eine schematische Ansicht der Umlaufbahn von sechs Rundfunksatelliten mit erdnaher Umlaufbahn;

Fig. 4    eine schematische Ansicht ähnlich wie in Fig. 2 zur Veranschaulichung bestimmter geometrischer Beziehungen;

Fig. 5    eine vereinfachte Darstellung zur Veranschaulichung der Dopplerverschiebung, der Dopplerverschiebungsgeschwindigkeit und des Differenz-Dopplereffektes bei einer Relativbewegung zwischen dem Bezugspunkt mit der Uplink-Station und dem Satelliten;

Fig. 6    ein Blockschaltbild einer Sendeeinrichtung bei einer alternativen Ausführungsform des erfindungsgemäßen Verfahrens;

Fig. 7    ein Blockschaltbild eines herkömmlichen Satellitentransponders, wie er bei der alternativen Ausführungsform des erfindungsgemäßen Verfahrens verwendet werden kann;

Fig. 8    ein Blockschaltbild einer Bodenstelle mit mehreren Sendeeinrichtungen gemäß Fig. 6, und

Fig. 9    eine schematische Darstellung für die Signalwege eines zentral in die Bodenstelle nach Fig. 8 eingespeisten Rundfunksignals.

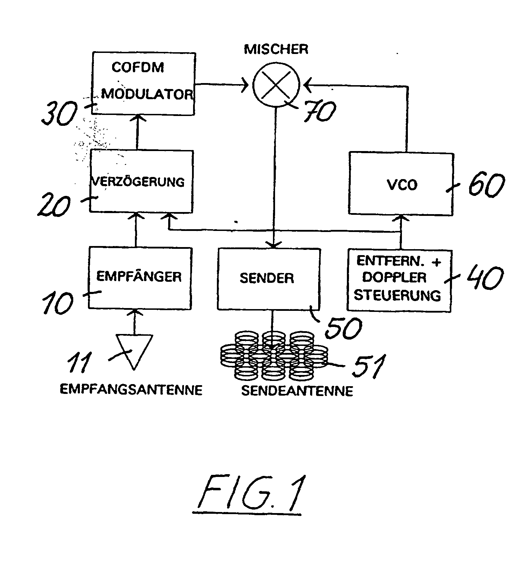

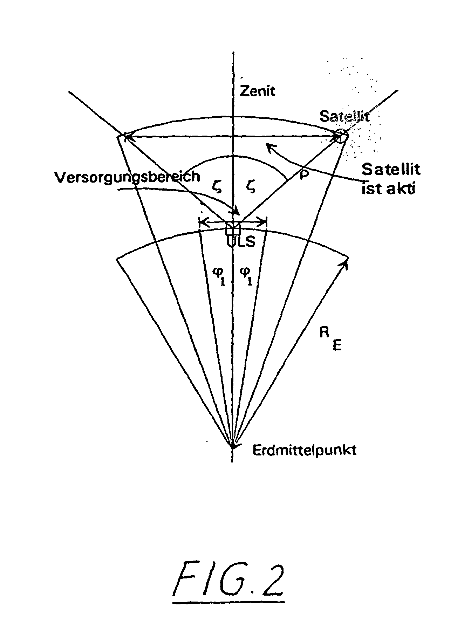

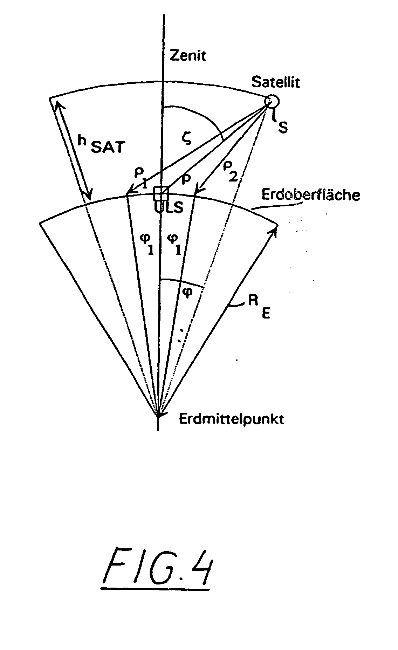

Das erfindungsgemäß vorgeschlagene System teilt Satelliten mit erdnahen und mittleren Umlaufbahnen zwischen verschiedenen Rundfunkveranstaltern auf. Jeder Satellit ist bei dem Satellitentransponder gemäß Fig. 1 mit Empfängern 10 ausgerüstet, um über eine Empfangsantenne 11 den DAB-Übertragungsmultiplex von den Uplink-Stationen oder von einem anderen Satelliten, z.B. Fernmeldesatelliten, zu empfangen (Fig. 1). Über eine Verzögerungsleitung 20 wird jeder empfangene DAB-Übertragungsmultiplex einem COFDM-Modulator 30 zugeführt, wobei die Verzögerungsleitung 20 von einer Entfernungs- und Doppler-Steuerung 40 gesteuert wird. Die Verzögerungsleitung 20 kompensiert die Gesamtlaufzeit des DAB-Signals, welches sich zusammensetzt aus der Laufzeit zwischen Sendestelle und Empfänger 10 im Satelliten sowie der Laufzeit zwischen einem Sender 50 im Satelliten und einem Empfänger an einem definierten Bezugspunkt im Versorgungsgebiet. Die Steuerung 40, welche die Verzögerungsleitung 20 steuert, erfaßt daher die Entfernungen zwischen Uplink-Station (Sendestelle) und Satellit sowie zwischen Satellit und einem definierten Bezugspunkt im Versorgungsgebiet, um hieraus die gesamte Signallaufzeit des DAB-Signals zu berechnen. Die Steuerung 40 steuert ferner einen variablen Oszillator 60 (VCO), um die Doppler-Verschiebung bezüglich des Ortes der Uplink-Station zu kompensieren. Die Erfassung der Entfernungen und der Entfernungsgeschwindigkeiten erfolgt durch Signalverarbeitung an Bord des Satelliten. Das COFDM-modulierte DAB-Signal am Ausgang des COFDM-Modulators 30 wird mit der Ausgangsfrequenz des variablen Oszillators 60 in einem Mischer 70 gemischt, wodurch die Mittenfrequenz der COFDM-modulierten DAB-Signale von der nachgeführten Ausgangsfrequenz des steuerbaren Oszillators 60 bestimmt wird. Über den Sender 50 und eine Sendeantenne 51 überträgt der Satellit das Ausgangssignal des Mischers 70 zu den Empfängern im vorgesehenen Versorgungsgebiet, wobei im Sender 50 die COFDM-modulierten DAB-Signale verstärkt werden. Das auf diese Weise abgestrahlte DAB-Rundfunksignal wird von den Teilnehmern in dem Versorgungsbegiet empfangen, welches sich unter dem Satelliten befindet. Der Einfallswinkel bezogen auf das Satelliten-Koordinatensystem und die räumliche Entfernung zum Bezugspunkt wird an Bord des Satelliten laufend gemessen und analysiert, ebenso wie die HF-Frequenzabweichung des Uplink-Signals aufgrund des Doppler-Effektes. Falls der Einfallswinkel des ankommenden Uplink-Signals einen vorgegebenen Grenzwert von beispielsweise 20° überschreitet, wird der im Satelliten befindliche Sender 50 eingeschaltet und das COFDM-Signal wird in Richtung der Quelle des ankommenden Uplink-Signals gesendet, wie aus Fig. 2 ersichtlich ist. Die an Bord des Satelliten gemessene Doppler-Abweichung des empfangenen Uplink-Signals wird ausgewertet, um die Mittenfrequenz des ausgesendeten Signals nachzuführen. Die Mittenfrequenz des Satellitensignals wird mittels des variablen Oszillators 60 auf einen solchen Wert eingestellt, welcher die auftretende Doppler-Abweichung am Ort der Uplink-Station exakt auf Null kompensiert.

Die Verzögerungszeit wird durch Auswertung der Entfernungsinformation gesteuert, welche die Summe der Entfernung zwischen dem Ort des Satelliten und dem Bezugspunkt im Versorgungsgebiet sowie der Entfernung zwischen dem Ort des Satelliten und dem Ort der Uplink-Station ist. Diese gesamte Signallaufzeit des DAB-Signals wird während des aktiven Teils der Satellitenbahn konstant gehalten. Gegebenenfalls wird der an Bord des Satelliten befindliche Sender 50 ausgeschaltet, wenn der Einfallswinkel bezogen auf das Satellitenkoordinatensystem einen bestimmten Grenzwert unterschreitet.

Aus der schematischen Darstellung nach Fig. 2 ist ersichtlich, wie der Rundfunksatelliten-Transponder innerhalb eines Kegels betrieben bzw. aktiviert wird, welcher durch den Zenit-Entfernungswinkel ζ an der Uplink-Station ULS definiert wird. Der Ort der Uplink-Station stellt das Zentrum des Versorgungsbereiches dar, welcher durch die

Winkelsektoren $-\phi_1$ und $+\phi_1$ bezogen auf den Erdmittelpunkt, bestimmt wird.

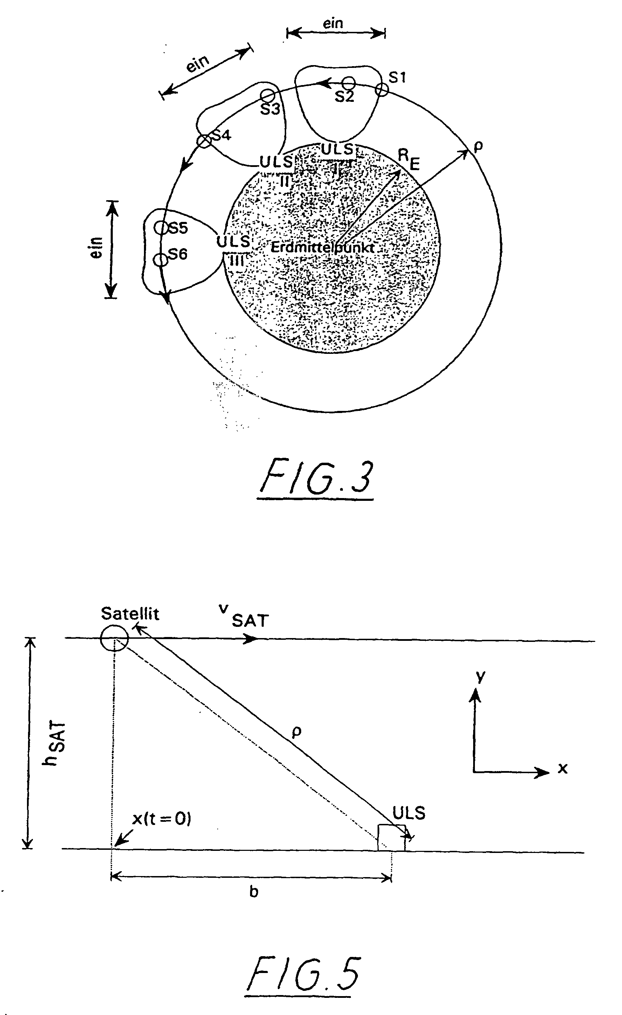

Die Dopplerkompensation, die Steuerung der Verzögerungszeit und die Einschalt-Ausschaltbedingungen sind geeignet, weiche Signalübergänge (vgl. Fig. 3) von dem einen Satelliten zu einem oder zu mehreren anderen Satelliten zu gewährleisten. Wie noch erläutert werden soll, können zwei oder mehrere Satelliten gleichzeitig betrieben werden, ohne daß eine DAB-Symbol-Interferenz oder inakzeptable OrthogonalitätsVerletzungen des EUREKA 147-DAB-Signaltyps innerhalb eines Versorgungsbereichs auftreten.

Die Uplink-Stationen verfügen über rotationssymetrische Richtantennen mit einer maximalen Verstärkung in vertikaler Richtung. Die Bündelung der Antennen wird auf den festen Winkel justiert, innerhalb welchem der Satellit aktiv ist. Zur Gewinnung von Informationen über Entfernung, Entfernungsgeschwindigkeit und Einfallswinkel bezogen auf das Satelliten-Koordinatensystem an Bord des Satelliten lassen sich innerhalb des DAB-Multiplex geeignete Zusatzsignale übertragen. Die Uplink-Stationen am Erdboden können ohne Beschränkung der Anwendbarkeit des Verfahrens durch Bezugspunkte im Versorgungsgebiet und Uplink-Stationen in Erdumlaufbahnen ersetzt werden.

Die Bahndaten des Satellitensystems werden in Abhängigkeit von den jeweiligen Anforderungen hinsichtlich der Leistung an den Versorgungsrändern, der Verfügbarkeit der Übertragungsfrequenzen und den Toleranzen des örtlichen Elevationswinkelbereiches gewählt. Es gibt keine Einschränkungen bezüglich der Inklination, der Exzentrizität, der Umlaufzeit, der Lage des aufsteigenden Knotens oder der Lage des Perigäums. In Abhängigkeit der Höhe über Grund ändert sich die Anzahl der für eine weltweite, kontinuierliche Versorgung erforderlichen Satelliten in einem Bereich zwischen 10 und 100. Bei dem Beispiel nach Fig. 3 sind sechs Rundfunksatelliten S 1 bis S6 vorgesehen, wobei die aktiven Zenitwinkelzonen von drei Uplink-Stationen mit ULS I, ULS II und ULS III auf der Erdoberfläche angegeben sind. Wenn sich der Satellit S 1 der Uplink-Station ULS I nähert, wird er aktiviert. Der Satellit S2 ist noch aktiv und trägt zur Rundfunkversorgung im Bereich der Uplink-Station I bei. Der Satellit S3 ist aktiv und versorgt den Bereich der Uplink-Station II, wohingegen der Satellit S4 gerade den Aktivierungskegel der Uplink-Station II verläßt und inaktiv wird. Der Versorgungsbereich der Uplink-Station III wird von den Satelliten S5 und S6 gleichzeitig versorgt. An einer Stelle einer Uplink-Station am Boden kann ein anderer Satellit, z.B. Fernmeldesatellit, treten, der das Signal dem Rundfunksatelliten zuführt.

Zur Vereinfachung soll für die nachfolgenden Erläuterungen angenommen werden, daß die Orbitalbewegung des Satelliten kreisförmig ist. Atmosphärische oder ionosphärische Ausbreitungseffekte bleiben unberücksichtigt, wenn die Verzögerungszeiten der DAB-Symbole, der Doppler-Effekt oder die Leistung an den Versorgungsrändern berechnet werden. Die Form der Erde wird als sphärisch angenommen, wobei Störungen auf Grund von Abflachungen der Erde und der Erdrotation vernachlässigt werden. Auf spezielle geographische Bereiche wird vorliegend nicht eingegangen. Es wird ferner angenommen, daß DAB-Rundfunksatelliten zur Durchführung der Signalübergabe ein- und ausgeschaltet werden können und zwar in Abhängigkeit von dem auftretenden Elevationswinkel im Zentrum des Versorgungsbereiches. Das Satelliten-Sendesystem kann hinsichtlich der HF-Mittenfrequenz (zur Kompensation von Doppler-Effekten) gesteuert werden und verfügt über Möglichkeiten zur Laufzeitverzögerung des empfangenen Uplink-Signals sowie zur Kompensation der sich ändernden Entfernungen bzw. Signallaufzeiten.

Von den Uplink-Stationen wird angenommen, daß sie kontinuierlich arbeiten. Sie haben keine steuerbaren Antennen, so daß keine Satelliten-Verfolgung erfolgt. Die Signalübergabe zwischen den einzelnen Satelliten wird von der Uplink-Station nicht unmittelbar unterstützt; vielmehr wird der Übergabevorgang vollständig durch die Satelliten im Orbit gesteuert.

Im Folgenden sollen die Systemanforderungen aufgrund des Schutzzeit-Intervalls des EUREKA 147 DAB-Signaltyps erörtert werden.

Falls ein von Symbol-Interferenzen freier Empfang erforderlich ist, darf der Zeitunterschied bis zum Eintreffen eines COFDM-Symbols, welches von zwei getrennten Signalquellen gleichzeitig gesendet wird, das sogenannte Schutzzeitintervall am Empfangsort nicht überschreiten. Im Falle von Satelliten als Signalquellen hat dieses Schutzzeitintervall Auswirkungen auf die Größe des Versorgungsbereiches. Zum Verständnis hierfür sind in der schematischen Darstellung nach Fig. 4 die verschiedenen Variablen angegeben, wobei mit ULS die Uplink-Station und mit S der Rundfunksatellit bezeichnet sind. Die Lageverhältnisse sind innerhalb der Orbitalebene des Satelliten S dargestellt. Dabei wird angenommen, daß der Satellit S die Uplink-Station ULS in Zenitrichtung überquert, was den schlimmsten Fall darstellt.

Das Profil der in Fig. 4 dargestellten Erdoberfläche unterhalb des Satelliten S innerhalb der Orbitalebene ist als Kreisbogen wiedergegeben. Der Ursprung des KoordinatenSystems ist der Erdmittelpunkt. Die Höhe des Satelliten über Grund ist mit $h_{SAT}$, der Erdradius mit $R_E$ angegeben. Die Uplink-Station besitzt die Polarkoordinaten $0, R_E$. Gegenüber dem über der Uplink-Station aufgetragenen Zenit besitzt der Satellit den Zenitwinkel $\zeta$, so daß die Position des Satelliten durch die Polarkoordinaten $\phi$, $R_E + h_{SAT}$ gegeben sind. Ein Rundfunkversorgungsbereich wird definiert durch eine Segmentzone um die Uplink-Station ULS, welche gegeben ist durch den geozentrischen Polarwinkel $\phi_1$. Wird die Entfernung zwischen der Uplink-Station ULS und dem Satelliten S mit p und die Entfernungen zwischen den linken und rechten Rändern des Versorgungsgebietes zum Satelliten $p_1$ und $p_2$ bezeichnet, dann gilt:

$$\rho_1{}^2 = (\rho \cdot \sin\zeta - R_E \cdot \sin\varphi_1)^2 + (R_E + \rho \cdot \cos\zeta - R_E \cdot \cos\varphi_1)^2 \tag{1}$$

$$\rho_2{}^2 = (\rho \cdot \sin\zeta + R_E \cdot \sin\varphi_1)^2 + (R_E + \rho \cdot \cos\zeta - R_E \cdot \cos\varphi_1)^2. \tag{2}$$

Die Differenz

$$\rho_2{}^2 - \rho_1{}^2 = 4 \cdot R_E \cdot \rho \cdot \sin\varphi_1 \cdot \sin\zeta \tag{3}$$

kann wegen der Beziehung

$$(\rho_2{}^2 - \rho_1{}^2) = (\rho_2 + \rho_1) \cdot (\rho_2 - \rho_1)$$

angenähert werden zu

$$\rho_2{}^2 - \rho_1{}^2 = 2 \cdot \rho \cdot (\rho_2 - \rho_1), \tag{4}$$

falls die Höhe des Satelliten über Grund groß im Vergleich zum Ausmaß des Versorgungsbereiches ist.

Als Ergebnis erhält man eine Gleichung, welche das Winkelmaß des Versorgungsbereiches als Funktion des Zenitwinkels des Satelliten bezogen auf den Ort der Uplink-Station, der Entfernung des Satelliten vom Erdmittelpunkt und der Differenz der Weglängen zwischen dem Satelliten S und den Rändern des Versorgungsgebietes darstellt:

$$\varphi_1 = \arcsin\{(\rho_2 - \rho_1)/(2 \cdot R_E \cdot \sin\zeta)\}, \tag{5}$$

wobei sich der Durchmesser $D_{sa}$ des Versorgungsbereiches ergibt zu:

$$D_{sa} = 2 \cdot R_E \cdot \varphi_1. \tag{6}$$

Falls der Unterschied der beiden Wegstrecken $p - p_1$ bzw. $p - p_2$ die entsprechende Signallaufzeit um nicht mehr als die Hälfte des Schutzintervalls $\Delta\tau$ des EUREKA 147 DAB-COFDM-Signals überschreitet, so kann innerhalb des Versorgungsbereichs eine Symbolinterferenz vermieden werden, sofern eine Rundfunkversorgung durch mehrere Satelliten gleichzeitig innerhalb des gegebenen Zenitwinkelkegels $\zeta$ (Fig. 3) erfolgt. Zu diesem Zweck kompensiert eine justierbare Verzögerungsleitung an Bord des Satelliten die Gesamtlaufzeit der Rundfunkverbindung zwischen der Uplink-Station (die hier als am Erdboden befindlich angenommen wird) und dem Satelliten sowie zwischen dem Satelliten und dem Bezugspunkt im Versorgungsgebiet. Die Verzögerungsdauer ist gegeben durch:

$$\delta\tau_{DELAY} = -2 \cdot c_{light}{}^{-1} \cdot \rho(t) + \tau_{offset} \tag{7}$$

Die maximale Verzögerungsdauer tritt auf, wenn der Satellit S die Uplink-Station ULS senkrecht (also im Zenit) überstreicht.

Der Durchmesser des möglichen Versorgungsbereichs als Funktion des Zenitwinkelkegels, des Schutzzeitintervalls und der Orbithöhe des Satelliten ergibt sich aus Tabelle 1.

Tabelle 1

| Beispiele für den Durchmesser des Versorgungsbereichs als Funktion des Schutzzeit-Intervalls und des Zenitwinkels, innerhalb welchem ein DAB-Satellit aktiv sein kann, ohne Symbol-Interferenzen hervorzurufen. | | | |
|---|---|---|---|
| $\zeta$[deg] | $\Delta\tau_{guard}$[µs] | $|\rho - \rho_1|$ [km] | $D_{sa}$ [km] |
| 20 | 256 | 38.4 | 112 |
| 10 | 256 | 38.4 | 221 |

Tabelle 1   (fortgesetzt)

| Beispiele für den Durchmesser des Versorgungsbereichs als Funktion des Schutzzeit-Intervalls und des Zenitwinkels, innerhalb welchem ein DAB-Satellit aktiv sein kann, ohne Symbol-Interferenzen hervorzurufen. | | | |
|---|---|---|---|
| $\zeta$[deg] | $\Delta\tau_{guard}$[$\mu$s] | $|\rho - \rho_1|$ [km] | $D_{sa}$ [km] |
| 20 | 128 | 19.2 | 56.1 |
| 10 | 128 | 19.2 | 112 |
| 20 | 64 | 9.6 | 28.1 |
| 10 | 64 | 9.6 | 56.1 |

Aus Tabelle 1 ist ersichtlich, daß die Größe des Versorgungsbereichs von der Größe des Zenitwinkelkegels abhängt. Falls der Kegel eng ist, vergrößert sich die Größe des Versorgungsbereichs. Indessen wird der Teil der Flugbahn, innerhalb welchem der Satellit aktiv betrieben werden kann, entsprechend verringert. Aus diesem Grund muß ein Kompromiß zwischen der Größe des Versorgungsbereiches, der Anzahl von Satelliten im Orbit und dem minimalen Elevationswinkel getroffen werden.

Im Folgenden soll nunmehr der Einfluß der Doppler-Verschiebung abgeschätzt werden. Die Geschwindigkeit eines Satelliten relativ zum Boden hängt von den Bahnparametern ab. Zur Grobabschätzung des Einflusses der Doppler-Verschiebung auf die Verschlechterung des empfangenen EUREKA 147 DAB-Signals können einige vereinfachende Annahmen getroffen werden. Dabei ist es ausreichend, wenn die Überlegungen auf Kreisbahnen beschränkt werden.

Aufgrund der maximalen Größe des Versorgungsbereiches ($D_{sa}$ < 250 km), der steilen Elevationswinkel ($\zeta$ < 20°) und der angenommenen minimalen Höhe des Satelliten über Grund ($h_{sat}$ > 800 km) ist ferner die Näherung der sphärischen Oberflächen durch ebene Oberflächen bzw. der Kreisbogen durch gerade Linien gerechtfertigt. Mit diesen Vereinfachungen erhält man aus Fig. 5 folgende Beziehung:

$$\rho^2(t) = ( b - V_{SAT} \cdot t)^2 + h^2_{SAT} \tag{8}$$

wobei

$v_{sat}$    die Geschwindigkeit des Satelliten,
b        die x-Koordinate der Grenze des Versorgungsbereiches,
p(t)     die Entfernung des Satelliten bezüglich des Zentrums des Versorgungsbereiches, und
t=0     die Zeit beim Überqueren des durch $\zeta$ gegebenen Zenitwinkelkegels durch den Satelliten

bedeuten.

Die Satellitengeschwindigkeit errechnet sich dann zu:

$$v_{SAT} = (\mu/(R_E + h_{SAT}))^{1/2} \tag{9}$$

wobei $\mu = 3{,}99 \cdot 10^5 km^3 \cdot s^{-2}$ ist.

Die zeitliche Ableitung der Gleichung 8 liefert die Entfernungsgeschwindigkeit:

$$d\rho/dt = - (b - v_{SAT}t) \cdot v_{SAT} / (( b - v_{SAT} \cdot t)^2 + h^2_{SAT})^{1/2} \tag{10}$$

aus welcher die Doppler-Verschiebung

$$\Delta f(b,t) = (f_{RF} / c_{light}) \cdot d\rho/dt \tag{11}$$

abgeleitet werden kann, wenn $f_{RF}$ die Trägerfrequenz des Satellitensignals ist. Im Falle des vorliegend betrachteten DAB-Satellitensystems mit erdnahen und mittleren Umlaufbahnen ist der Differenz-Dopplereffekt von Interesse. Nach dem Systemkonzept wird die auftretende Doppler-Verschiebung am Bezugspunkt im Versorgungsgebiet durch die Steuerung des variablen Oszillators 60 (Fig. 1) an Bord des Satelliten vollständig kompensiert. Dies bedeutet, daß Kompensationsfehler an denjenigen Stellen auftreten, welche nicht mit dem Zentrum des Versorgungsbereichs zusammenfallen. Der schlimmste Fall, nämlich die maximale Frequenzabweichung, tritt an den Rändern des Versorgungsbereiches auf. Die maximale Frequenzverschiebung ergibt sich zu:

$$\Delta f_{deviation}(b,t) = |\Delta f(0,t) - \Delta f(b,t)|. \tag{12}$$

In Tabelle 2 ist die auftretende Doppler-Verschiebung angegeben, wie sie im Zentrum des Versorgungsbereichs ohne Kompensation an Bord des Satelliten auftritt. Tabelle 3 zeigt die verbleibende Differenzverschiebung an den Rändern des Versorgungsbereichs unter der Annahme, daß die Doppler-Verschiebung bezüglich des Zentrums des Versorgungsbereichs an Bord des Satelliten kompensiert wird.

Tabelle 2

| $f_{RF}$ [GHz] | $\zeta$ | $h_{SAT}$[km] | $v_{SAT}$[km/s] | $D_{sa}$[km] | $\Delta\tau_{guard}$[µs] | $|\Delta f_{cmax}$[Hz]$|$ | $|\Delta f_{bmax}$[Hz]$|$ |
|---|---|---|---|---|---|---|---|
| 1.50 | 10 | 1000 | 7.36 | 221 | 256 | 5523 | 9299 |
| 1.50 | 10 | 5000 | 5.92 | 221 | 256 | 2880 | 3511 |
| 1.50 | 10 | 10000 | 4.94 | 221 | 256 | 1668 | 1934 |
| 1.50 | 20 | 1000 | 7.36 | 112 | 256 | 10878 | 12586 |
| 1.50 | 20 | 1000 | 7.36 | 56 | 128 | 10878 | 11745 |
| 1.50 | 20 | 5000 | 5.92 | 112 | 256 | 5671 | 5966 |
| 1.50 | 20 | 5000 | 5.92 | 56 | 128 | 5671 | 5819 |
| 1.50 | 20 | 10000 | 4.94 | 112 | 256 | 3268 | 3413 |
| 1.50 | 20 | 10000 | 4.94 | 56 | 128 | 3268 | 3349 |

In Tabelle 2 ergibt sich der auftretende maximale Absolutwert der Doppler-Verschiebung $\Delta f$ als Funktion der Bahnhöhe $h_{sat}$, des Durchmessers $D_{sa}$ des Versorgungsbereiches, welcher auf das Schutzzeitintervall $\Delta_{guard}$ bezogen ist, und der HF-Mittenfrequenz $f_{RF}$ im Zentrum des Versorgungsbereiches ($\Delta f_{cmax}$) bzw. an den Versorgungsgrenzen ($\Delta fb_{max}$). Der Satelliten-Sender 50 wird eingeschaltet, wenn sich der Satellit innerhalb eines Zenitwinkelkegels mit $\zeta$ = 10,20° befindet. Dies entspricht einem minimalen Elevationswinkel im Zentrum des Versorgungsbereichs von 80,70°.

Tabelle 3

| $f_{RF}$ [GHz] | $\zeta$ | $h_{SAT}$[km] | $v_{SAT}$[km/s] | $D_{sa}$[km] | $\Delta\tau_{guard}$[µs] | min | max | |max-min| |
|---|---|---|---|---|---|---|---|---|
| 1.50 | 10 | 1000 | 7.36 | 221 | 256 | 3776 | 4062 | 286 |
| 1.50 | 10 | 5000 | 5.92 | 221 | 256 | 631 | 654 | 23 |
| 1.50 | 10 | 10000 | 4.94 | 221 | 256 | 266 | 276 | 10 |
| 1.50 | 20 | 1000 | 7.36 | 112 | 256 | 1708 | 2064 | 356 |
| 1.50 | 20 | 1000 | 7.36 | 56 | 128 | 867 | 1033 | 166 |
| 1.50 | 20 | 5000 | 5.92 | 112 | 256 | 294 | 333 | 39 |
| 1.50 | 20 | 5000 | 5.92 | 56 | 128 | 148 | 167 | 29 |
| 1.50 | 20 | 10000 | 4.94 | 112 | 256 | 127 | 139 | 12 |
| 1.50 | 20 | 10000 | 4.94 | 56 | 128 | 61 | 71 | 10 |

Tabelle 3 zeigt die auftretenden minimalen und maximalen Werte der Doppler-Verschiebung im Falle einer Vor-Kompensation an Bord des Satelliten. Die angegebenen Werte stellen den schlechtesten Fall dar, wie er sich für einen Beobachter an den Versorgungsrändern ergibt. Die erläuterte Kompensationsstrategie beseitigt die auftretende Doppler-Verschiebung im Zentrum des Versorgungsbereichs. In Tabelle 3 sind die gleichen Parameter wie in Tabelle 2 angegeben. Die Abkürzungen haben folgende Bedeutung:

$$\text{min} = \text{min} \{|\Delta f_c[Hz] - \Delta f_b[Hz]|\},$$

$$\text{max} = \text{max} \{|\Delta f_c[Hz] - \Delta f_b[Hz]|\}$$

Die Doppler-Verschiebung bei einer HF-Mittenfrequenz von 150 MHz beträgt ein Zehntel der in Tabelle 3 angegebenen Werte.

Wie man aus Tabelle 2 erkennt, ist die Doppler-Verschiebung des Satellitensignals am Boden ganz offensichtlich ohne weitere Maßnahmen nicht tolerierbar, da sie ernsthafte Verletzungen der Orthogonalität des COFDM-Signals für alle DAB-Moden verursacht. Demgegenüber funktioniert die Doppler-Kompensation nach der vorliegenden Erfindung hinreichend gut, wie man aus den Ergebnissen für den schlimmsten Fall gemäß Tabelle 3 ersieht. Es zeigt sich, daß an sämtlichen Orten innerhalb des Versorgungsbereichs die auftretende Gesamtfrequenzänderung während eines Satellitendurchlaufs maximal etwa 3 % der beobachteten Werte im Vergleich zu einer fehlenden Kompensation beträgt. Wenn der HF-Träger unterhalb 150 MHz liegt, tritt für sämtliche DAB-Moden keine wesentliche Verschlechterung der Empfangsverhältnisse aufgrund von Orthogonalitätsverletzungen auf. Im Falle der Verwendung des L-Bandes als HF-Träger ist der DAB-Mode # 1 für Satelliten mit erdnahen Umlaufbahnen nicht geeignet; dieser Mode ist aufgrund der Mehrwege-Ausbreitung am Boden ohnehin nicht für eine L-Band-Übertragung geeignet.

Es versteht sich, daß die absolute Frequenz-Abweichung von der Mittenfrequenz des nominellen DAB-Kanals an einem speziellen Ort von der Geometrie der Satellitenbahn relativ zu dem Versorgungsbereich abhängt. Wenn sich der Empfänger an der Grenze des Versorgungsbereichs befindet, welche ganz in der Nähe der Stelle liegt, wo der Satellit aktiv wird, ist die Frequenz-Abweichung positiv; falls der Empfänger an der gegenüberliegenden Versorgungsgrenze liegt, ist die Frequenz-Abweichung negativ. Die relative Abweichung von der exakten Lage der HF-Mittenfrequenz ist in allen Fällen sehr gering im Vergleich zum nicht-kompensierten Fall.

Die Leistungsbilanz von DAB-Satelliten mit erdnahen und mittleren Umlaufbahnen läßt sich mit Hilfe folgender Gleichung abschätzen:

$$C/N = P + 136.15 - 20\log(f_{RF}) - 20\log(\rho) - L_a + G_T + G_R - 10\log(T) - 10\log(B) \qquad (13)$$

wobei

P die Leistung des Senders [dBW],
$f_{RF}$ die HF-Trägerfrequenz [GHz],
p die Länge des Signalweges [km],
$L_a$ die atmosphärische Dämpfung [dB],
$G_T$ die Verstärkung der Sendeantenne an Bord des Satelliten [dB],
$G_R$ die Verstärkung der Empfangsantenne an Bord des Satelliten [dB],
T die Temperatur des Empfangssystems an Bord des Satelliten [K],
B die Signalbandbreite [Hz]

bedeuten.

Für die Bauteile des Rundfunksystems müssen einige Annahmen bezüglich der Breite Öffnungskeule der Sendeantenne 51 (Fig. 1), der Eigenschaften des Rundfunkempfängers und des Antennen-Wirkungsgrades gemacht werden. Zur Vereinfachung wird davon ausgegangen, daß die Halbwertsbreite der Sendeantenne 51 an das Versorgungsbereich angepaßt ist. Dies ist aus Frequenzgründen günstig, da die räumliche Wiederholung der Nachbarkanalfrequenzen optimal ist, wenn der Spill-Over minimiert wird. Für die Sendeantenne wird ein Wirkungsgrad von 0,5 angenommen. In der Praxis bedeutet dies, daß der Satellit mit einer phasengeschalteten Array-Antenne ausgerüstet ist, wobei die Mitte des Antennenstrahls auf die Uplink-Station bzw. den Bezugspunkt im Versorgungsgebiet zeigt. Da die Richtung auf diesen Referenzort an Bord des Satelliten gemessen wird oder berechnet werden kann, ist diese Annahme realistisch.

Mit den Vorstehenden Annahmen kommt man zu folgenden Ergebnissen:

| Versorgungsbereichsgröße $D_{sa}$[km] | 250 | 120 | 60 | 30 |
|---|---|---|---|---|
| HPBW$_{1000}$ | 14.3° | 6.9° | 3.4° | 1.7° |
| G$_{1000}$ | 24 dB | 30 dB | 36 dB | 42 dB |
| HPBW$_{5000}$ | 2.9° | 1.4° | 0.7° | 0.4° |
| G$_{5000}$ | 38 dB | 44 dB | 50 dB | 56 dB |
| HPBW$_{10000}$ | 1.4° | 0.7° | 0.4° | 0.2° |
| G$_{10000}$ | 44 dB | 50 dB | 56 dB | 62 dB |

In der vorstehenden Tabelle geben die Indizes die Bahnhöhe an, wobei die Temperatur des Empfangssystems 400°K, die Bandbreite 1,536MHz, die atmosphärische Dämpfung $L_a$ 1dB und die Sendeleistung P 100W betragen.

Für die Rausch-Leistungsverhältnisse ergeben sich folgende Werte:

| Versorgungsbereichsgröße $D_{sa}$[km] | 250 | 120 | 60 | 30 |
|---|---|---|---|---|
| C/N @ 150 MHz | 48.8 dB | 54.8 dB | 60.8 dB | 66.8 dB |
| C/N @ 1.5 GHz | 28.8 dB | 34.8 dB | 40.8 dB | 46.8 dB |

Das vorstehende Ergebnis zeigt, daß Dämpfungseffekte aufgrund von Sperr- und Belaubungsdämpfung mit Hilfe hoher Leistungsflußdichten beseitigt werden können. Die Verwendung von VHF-Frequenzen ist optimal bezüglich Antennenöffnung, Leistungsbilanz und Größe des Versorgungsbereichs.

Was die Anzahl der für das erfindungsgemäße System erforderlichen Satelliten anbelangt, so ist davon ausgegangen, daß eine kontinuierliche Versorgung erfolgt. Hieraus ergibt sich der nutzbare (aktive) Bogenabschnitt als Teil einer vollständigen Satellitenbahn. Ferner läßt sich das zugeordnete Zeitintervall errechnen, in welchem sich der Satellit über der unteren Elevationswinkelgrenze befindet. Dieses Zeitintervall ist zumindest zweimal täglich für die Versorgung innerhalb des betrachteten Versorgungsbereichs verfügbar, da sowohl der bezüglich der Äquatorebene aufsteigende als auch absteigende Teil der Satellitenbahn in Betracht zu ziehen ist. Die erforderliche maximale Anzahl $N_{SAT}$ von Satelliten ergibt sich dann durch Teilung von 24 Stunden (1 Tag) durch die Dauer des Zeitintervalls, in welchem ein Satellit bezüglich eines spezifischen Versorgungsbereiches täglich aktiv ist. Die Ergebnisse sind in Tabelle 5 wiedergegeben. Dabei hängt $N_{SAT}$ nicht von der Größe des Versorgungsbereichs ab.

Tabelle 5

| $\zeta$ [deg] | $h_{SAT}$ [km] | arc [deg] | $\Delta t_{day}$[s] | $N_{SAT}$ |
|---|---|---|---|---|
| 10 | 1000 | 2.7 | 48 | 900 |
| 10 | 5000 | 8.8 | 296 | 146 |
| 10 | 10000 | 12.3 | 709 | 60 |
| 20 | 1000 | 5.6 | 98 | 440 |
| 20 | 5000 | 17.9 | 600 | 72 |
| 20 | 10000 | 24.7 | 1429 | 30 |

Die Erfindung läßt sich wie folgt zusammenfassen:

Ein Satellitensystem mit erdnahen oder mittleren Umlaufbahnen stellt ein geeignetes Rundfunkversorgungssystem dar, wenn als Übertragungsstandard der EUREKA 147-DAB-Standard gewählt wird. Die Eigenschaften eines dementsprechend bemessenen Satellitensystem mit erdnahen oder mittleren Umlaufbahnen sind:

- Weiche Signalübergabe zwischen den einzelnen Satelliten;

- einfache Hardware-Ausrüstung der Uplink-Stationen ohne Unterstützung für die Signalübergabe und ohne Satellitenverfolgung mittels schwenkbarer Antennen;

- ausgezeichnete Leistungsbilanz an den Versorgungsrändern;

- hohe Elevationswinkel innerhalb der Versorgungsbereiche;

- hohe Zuverlässigkeit aufgrund gleichzeitiger Übertragung durch mehrere Satelliten;

- weltweite Verfügbarkeit.

Die Bahnparameter sind nicht auf geosynchrone oder geostationäre Bahnen beschränkt. Vielmehr ist das vorgeschlagene Rundfunkversorgungssystem weltweit verfügbar. Verschiedene Rundfunkveranstalter können das vorgeschlagene Rundfunkversorgungssystem durch Installation kostengünstiger Erdstationen (Uplink-Stationen) miteinander teilen, welche lediglich das DAB-Multiplex-Übertragungssignal in vertikaler Richtung abzustrahlen brauchen. Weder eine Satellitenverfolgung noch eine Bodensteuerung für die Signalübergabe zwischen den Satelliten ist in den Uplink-Stationen erforderlich. Die erzielbaren Versorgungsbereiche sind ausreichend groß für eine regionale und nationale Rundfunkversorgung.

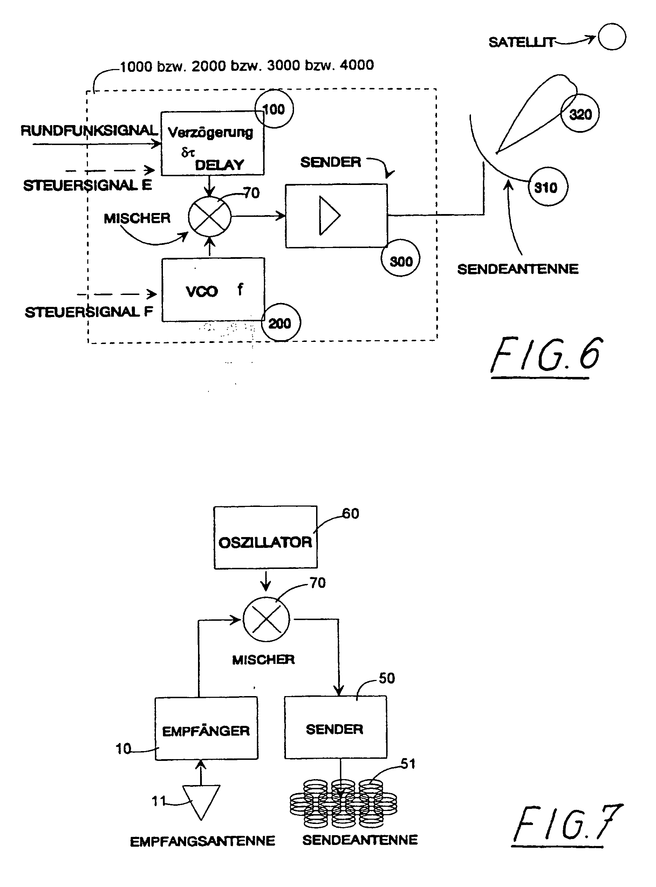

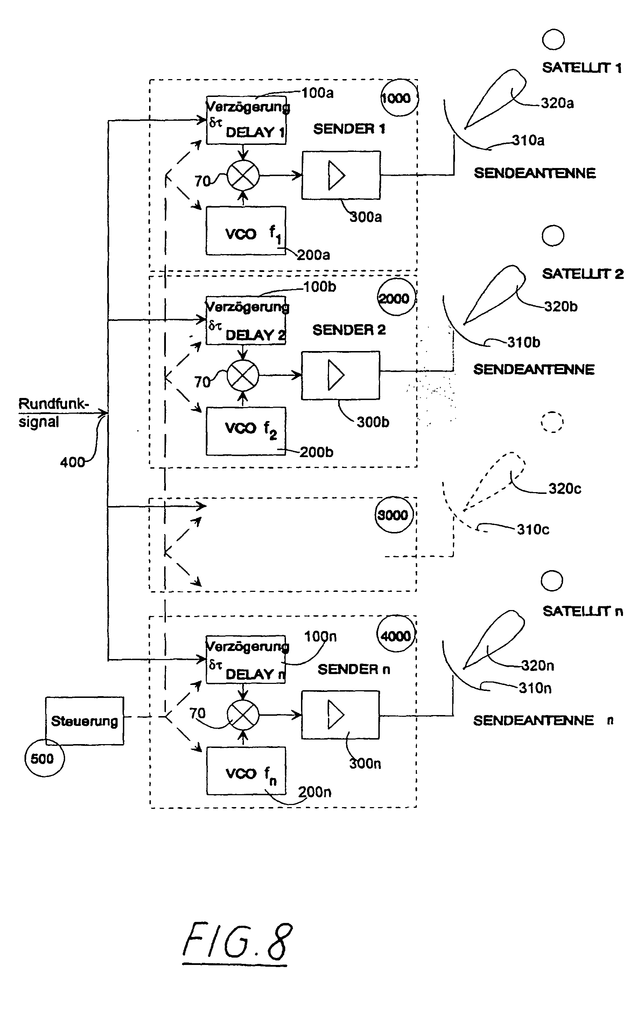

Bei einer an Hand der Fign. 6 bis 9 dargestellten alternativen Ausführungsform des erfindungsgemäßen Verfahrens können Maßnahmen in einer Bodenstation (Fig. 8) getroffen werden, um die Gesamtlaufzeit des Signals konstant zu halten. Auf diese Weise läßt sich die Verzögerungsleitung 20 (Fig. 1) im Satelliten vermeiden, die von einer Steuereinrichtung 40 (Fig. 1) derart gesteuert wird, daß die Gesamtlaufzeit des Rundfunksignals von der Sendestelle am Boden zum Satelliten und vom Satelliten zurück zu einem Bezugspunkt im Versorgungsgebiet konstant gehalten wird. Bei der Alternative nach Fign. 6 bis 9 sind zunächst mindestens zwei identisch aufgebaute Sendeeinrichtungen erforderlich, um mindestens zwei Satelliten des Rundfunksignals zubringen zu können; andernfalls wäre ein unterbrechungsfreier Rundfunkbetrieb nicht möglich. Der technische Aufbau einer der benötigten Sendeeinrichtungen ist in Fig. 6 dargestellt.

Das COFDM-Rundfunksignal wird mit einer steuerbaren Verzögungseinrichtung 100 nach Maßgabe des Steuersignals E verzögert. Der Ausgang der Verzögerungseinrichtung 100 ist mit dem ersten Eingang eines Mischers 70 verbunden, dessen zweiter Eingang von dem Oszillator 200 mit variabler Frequenz f gespeist wird. Die Frequenz des Oszillators 200 wird von einem Steuersignal F gesteuert. Der Ausgang des Mischers 70 ist mit dem Eingang des Senders 300 verbunden, der über die Sendeantenne 310 mit gerichteter Antennenkeule 320 dem Satelliten das Rundfunksignal zuführt. Das Steuersignal F steuert den Oszillator 200 so, daß das von dem Satelliten in das Versorgungsgebiet wiederausgestrahlte Signal am Bezugspunkt konstante Frequenz hat. Das Steuersignal E steuert die Verzögerungseinrichtung 100 so, daß die Gesamtzeit, gebildet aus der Laufzeit durch die Verzögerungseinrichtung 100, der Laufzeit von der Bodenstelle zum Satelliten, der Laufzeit durch den Satellitentransponder (Fig. 7) und der Laufzeit vom Satelliten zum Bezugspunkt konstant ist und einem definierten Offset-Wert entspricht. Damit kompensiert das Steuersignal E mittels der Verzögerungseinrichtung 100 die Laufzeitänderungen zwischen der Bodenstelle und dem Satelliten, der infolge seiner Relativbewegung zur Bodenstelle seine Entfernung ändert; das Steuersignal F dient der Steuerung des Oszillators 200, der den Doppler-Effekt der Satellitenbewegung relativ zu einem Bezugspunkt im Versorgungsgebiet kompensiert.

Für den Satellitentransponder wird ein in Fig. 7 dargestellter, herkömmlicher Aufbau angenommen. Von dem Aufbau nach Fig. 1 unterscheidet sich der Transponder nach Fig. 7 dadurch, daß im Signalzweig zwischen Empfänger 10 und Mischer 70 die Verzögerung 20 und der COFDM-Modulator 30 fehlen. Ferner wird der Oszillator 60 gemäß Fig. 7 nicht von einer Steuerung 40 gesteuert, sondern läuft frei.

Der Aufbau der Bodenstelle ist in Fig. 8 gezeigt. Von einem Einspeisepunkt 400 aus, der mit einem Pfeil und der Bezeichnung "Rundfunksignal" eingezeichnet ist, wird in mindestens zwei, ansonsten beliebig viele Sendeeinrichtungen 1000, 2000, 3000 und 4000 gemäß Fig. 6 verzweigt. Von einer gemeinsamen Steuereinrichtung 500 werden die Steuersignale E (für den Laufzeitausgleich der variablen Entfernung zum jeweiligen Satelliten $S_1$, $S_2$ ... SJ und F (für die Kompensation des Dopplereffekts) erzeugt und an die Sendeeinrichtungen 1000, 2000, 3000, 4000 gegeben.

Die Sendeeinrichtungen 1000 und 2000 sind die Mindestausstattung einer Bodenstelle für die unterbrechungsfreie Versorung. Die Steuereinrichtung 500 erzeugt Steuersignale für die Einstellung der jeweiligen Oszillatorfrequenzen $f_1$, $f_2$ ... $f_n$ der Oszillatoren 200, die für die Kompensation des Doppler-Effektes variabel sind, sowie für die Einstellung der Verzögerungseinrichtungen 100, welche die Konstanz und Gleichheit der Laufzeiten aller Satellitenpfade zwischen dem zentralen Einspeisepunkt 400 des Rundfunksignals und dem Bezugspunkt im Versorgungsgebiet herstellen.

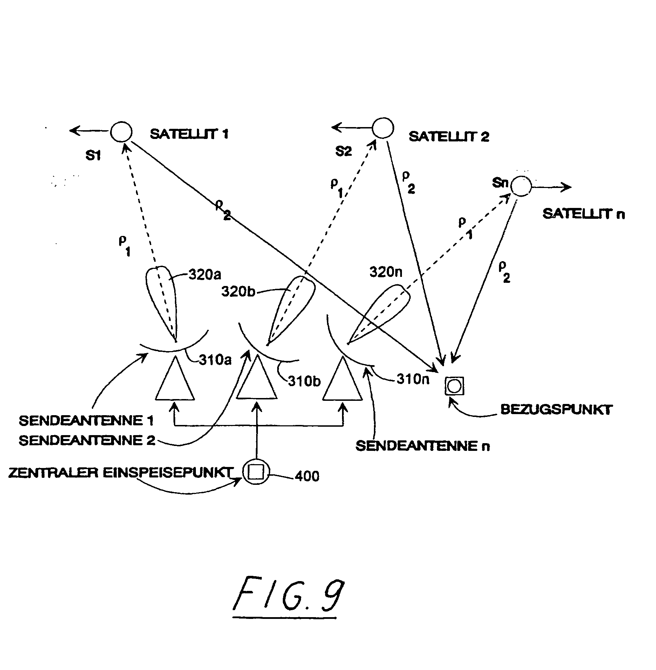

Die Sendeantennen 310a, 310b ... 310n der Bodenstelle gemäß Fig. 8 führen den erdnahen Satelliten $S_1$, $S_2$ ... $S_n$ innerhalb eines vorgegebenen Zenitwinkelbereichs die Rundfunksignale über Richtantennen zu. Die Gesamtlaufzeiten der einzelnen Signalwege zwischen zentralem Einspeisepunkt 400 der Sendeeinrichtungen 1000, 2000 ... 4000, welche sich zusammensetzt aus der Laufzeit durch die jeweilige Verzögerungseinrichtung 100a, 100b ... 100n, der Laufzeit von der Bodenstelle zum jeweiligen Satelliten 1, 2 ... n, der Laufzeit durch den Satellitentransponder (Fig. 7) und der Laufzeit vom jeweiligen Satelliten 1, 2 ... n zum Bezugspunkt, wird konstant und für jeden Satelliten 1, 2 ... n gleich groß gehalten. Dieser Sachverhalt ist in Fig. 9 veranschaulicht. Um die Laufzeiten der Rundfunksignale zwischen dem zentralen Einspeisepunkt 400 und dem Bezugspunkt im Versorgungsgebiet für alle Verbindungspfade zwischen der Bodenstelle, den Satelliten S1, S2 ... Sn und den Rückwegen zum Bezugspunkt konstant und gleich groß zu halten, werden die Verzögerungseinrichtungen 100 a, 100b ... 100n durch Steuersignale so nachgeführt, daß die veränderliche Laufzeit aufgrund der Relativbewegung zu den Satelliten $S_1$, $S_2$ ... $S_n$ ausgeglichen wird.

## Patentansprüche

1. Verfahren zum Übertragen von COFDM-modulierten Rundfunksignalen über ein Satellitensystem mit mehreren, auf erdnahen Bahnen relativ zu dem Bezugspunkt im Versorgungsgebiet sich bewegenden Satelliten, bei dem das Rundfunksignal im Satelliten über eine Zeitdauer $\delta_{\tau_{DELAY}}$ verzögert wird, derart, dass die Summe aus dieser Zeitdauer $\delta_{\tau_{DELAY}}$ und der gesamten Signallaufzeit $2 \cdot c_{Licht}^{-1} \cdot \grave{o}(t)$ des Rundfunksignals einem konstanten Wert $\tau_{offset}$ entspricht:

$$\delta_{\tau_{DELAY}} + 2 \cdot c_{Licht}^{-1} \cdot \rho(t) = \tau_{offset},$$

wobei

$\rho H(t)$ der Entfernung zwischen Satellit und dem Bezugspunkt, und $c_{Licht}$ der Lichtgeschwindigkeit entspricht,

und wobei sich die gesamte Signallaufzeit zusammensetzt aus der Laufzeit zwischen Sendestelle und Empfänger im Satelliten sowie der Laufzeit zwischen Sender im Satelliten und einem Empfänger an einem definierten Bezugspunkt im Versorgungsgebiet,

**dadurch gekennzeichnet, dass** die Mittenfrequenz der COFDM-modulierten Rundfunksignale, welche infolge der relativen Bewegung zwischen jedem Satelliten und dem Bezugspunkt einer Doppler-Verschiebung unterliegt, so nachgeführt wird, dass am Bezugspunkt die Mittenfrequenz der vom Satelliten empfangenen Rundfunksignale konstant ist.

2. Satelliten-Transponder zur Durchführung des Verfahrens nach Anspruch 1, **gekennzeichnet durch** folgende Merkmale:

a) einen Empfänger, welcher von einer Sendestelle, erdgebunden oder anderer Satellit, das Rundfunksignal empfängt und gegebenenfalls aufbereitet;

b) einer Verzögerungseinrichtung mit steuerbarer Verzögerungsdauer, welche das von dem Empfänger empfangene und gegebenenfalls aufbereitete Rundfunksignal um die Zeitdauer $\delta_{\tau_{DELAY}}$ verzögert, und zwar nach Maßgabe eines Steuersignals, welches von einer Steuereinrichtung erzeugt wird;

c) ein steuerbarer Oszillator (VCO), dessen Frequenz nach Maßgabe des Steuersignals oder eines weiteren Steuersignals der Steuereinrichtung so gesteuert wird, daß am Bezugspunkt des Versorgungsgebietes die Mittenfrequenz der vom Satelliten empfangenen Rundfunksignale konstant ist;

d) einen COFDM-Modulator, welcher die verzögerten, vom Empfänger empfangenen und gegebenenfalls aufbereiteten Rundfunksignale moduliert, wobei die Mittenfreuquenz der COFDM-modulierten Rundfunksignale von dem steuerbaren Oszillator nachgeführt wird, und

e) einen Sender, welcher die COFDM-modulierten Rundfunksignale verstärkt und einer Sendeantenne zuführt.

**Claims**

1. Method of transmitting COFDM-modulated broadcasting signals via a satellite system comprising a multiplicity of satellites moving on orbits close to earth relative to the reference point in the service area, wherein the broadcasting signal is delayed in the satellite over a period of time $\delta_{\tau_{DELAY}}$ such that the sum of this period of time $\delta_{\tau_{DELAY}}$ and of the total signal delay $2 \cdot c_{light}^{-1} \cdot ó(t)$ of the broadcasting signal corresponds to a constant value $\tau$:

$$\delta_{\tau_{DELAY}} + 2 \cdot c_{light}^{-1} \cdot \rho(t) = \tau_{offset,}$$

wherein

$\rho(t)$ corresponds to the distance between the satellite and the reference point, and $c_{light}$ corresponds to the speed of light,

and wherein the total signal delay is composed of the delay between the transmitting station and the receiver in the satellite as well as of the delay between a transmitter in the satellite and a receiver at a defined reference point in the service area,

**characterized in that** the center frequency of the COFDM-modulated broadcasting signals, which is subject to a Doppler shift as a result of the relative movement between each satellite and the reference point, is tracked such that the center frequency of the broadcasting signals received from the satellite is constant at the reference point.

2. Satellite transponder for carrying out the method according to claim 1, **characterized by** the following features:

a) a receiver which receives and optionally processes the broadcasting signal from a transmitting station, which is earth-based or from another satellite;

b) a delaying device having a controllable delay time, which device delays the broadcasting signal, which has been received from the transmitter and optionally processed, by the period of time $\delta_{\tau DELAY}$, in accordance with a control signal generated by a control device;

c) a controllable oscillator (VCO) whose frequency is controlled in accordance with the control signal or a further control signal from the control device such that the center frequency of the broadcasting signals received from the satellite is constant at the reference point of the service area;

d) a COFDM modulator which modulates the delayed broadcasting signals, which have been received from the receiver and optionally processed, the center frequency of the COFDM-modulated broadcasting signals being tracked by the controllable oscillator, and

e) a transmitter which amplifies the COFDM-modulated broadcasting signals and supplies them to a transmitting antenna.

**Revendications**

1. Procédé pour la transmission de signaux radiophoniques modulés en COFDM au moyen d'un système à satellites comprenant plusieurs satellites, lesdits satellites se déplaçant en orbite basse relativement au point de référence dans la zone desservie, procédé selon lequel le signal radiophonique est retardé dans le satellite d'une durée $\delta\tau DELAY$ telle que la somme de cette durée $\delta\tau DELAY$ et de la durée totale du signal $2 \cdot c_{lumière}^{-1} \cdot \acute{o}(t)$ dudit signal radiophonique ait une valeur constante $\tau$ :

$$\delta_{\tau DELAY} + 2 \cdot c_{lumière}^{-1} \cdot \rho(t) = \tau_{offset},$$

$\rho(t)$ correspondant à la distance entre ledit satellite et ledit point de référence et $c_{lumière}$ correspondant à la vitesse de la lumière,

et la durée totale du signal étant composée du temps de propagation entre la station émettrice et le récepteur dans le satellite, ainsi que du temps de propagation entre l'émetteur dans le satellite et un récepteur situé à un point de référence défini dans la zone desservie,

**caractérisé en ce que** la fréquence médiane des signaux radiophoniques modulés en COFDM, laquelle est soumise à un déplacement Doppler en conséquence du mouvement relatif entre chaque satellite et le point de référence, est guidée de telle façon que la fréquence médiane des signaux radiophoniques reçus par le satellite est constante au point de référence.

2. Répéteur de satellite pour la réalisation du procédé selon la revendication 1, **caractérisé par** les caractéristiques suivantes :

a) un récepteur, lequel reçoit et, le cas échéant, traite ledit signal radiophonique d'une station émettrice liée à la Terre ou d'un autre satellite ;

b) un équipement de retard ayant une durée de retard contrôlable, lequel retarde ledit signal qui a été reçu et, le cas échéant, traité par ledit récepteur d'une durée $\delta\tau DELAY$, en conformité à un signal pilote qui est produit par un dispositif de commande ;

c) un oscillateur contrôlable (VCO), dont la fréquence est commandée en conformité audit signal radiophonique ou à un autre signal pilote dudit dispositif de commande de façon à ce qu'au point de référence de ladite zone desservie, la fréquence médiane desdits signaux radiophoniques reçus par ledit satellite soit constante ;

d) un modulateur COFDM, lequel module lesdits signaux radiophoniques retardés qui ont été reçus par ledit récepteur et, le cas échéant traités, la fréquence médiane desdits signaux radiophoniques modulés en COFDM étant guidée par ledit oscillateur contrôlable, et

e) un émetteur, lequel amplifie lesdits signaux radiophoniques modulés en COFDM et les conduit à une antenne de transmission.

FIG.1

FIG.2

FIG.4

_FIG.3_

_FIG.5_

RUNDFUNKSIGNAL

STEUERSIGNAL E

Verzögerung
δτ
DELAY — 100

MISCHER — 70

SENDER

300

STEUERSIGNAL F

VCO    f — 200

1000 bzw. 2000 bzw. 3000 bzw. 4000

SATELLIT

320

310

SENDEANTENNE

*FIG.6*

OSZILLATOR — 60

MISCHER — 70

EMPFÄNGER — 10

SENDER — 50

11

EMPFANGSANTENNE

SENDEANTENNE — 51

*FIG.7*

FIG.8

FIG. 9